# EUROPEAN PATENT SPECIFICATION

(11) **EP 2 386 735 B1**
(45) Date of publication and mention of the grant of the patent: **16.09.2015**
(21) Application number: 09837506.6
(22) Date of filing: 09.01.2009
(51) Int. Cl.: F01N 13/00, F01N 3/08, F01N 3/20, F01N 9/00

(54) **EXHAUST GAS PURIFICATION APPARATUS FOR AN INTERNAL COMBUSTION ENGINE**
ABGASREINIGUNGSVORRICHTUNG FÜR EINE BRENNKRAFTMASCHINE
DISPOSITIF DE PURIFICATION DE GAZ D'ÉCHAPPEMENT POUR UN MOTEUR À COMBUSTION INTERNE

(43) Date of publication of application: 16.11.2011
(73) Proprietor: TOYOTA JIDOSHA KABUSHIKI KAISHA, Toyota-shi, Aichi-ken, 471-8571 (JP)
(72) Inventor: KAWAGUCHI, Bungo, Toyota-shi, Aichi-ken 471-8571 (JP); KAMOSHITA, Shinji, Toyota-shi, Aichi-ken 471-8571 (JP); ODA, Tomihisa, Toyota-shi, Aichi-ken 471-8571 (JP); OHASHI, Nobumoto, Toyota-shi, Aichi-ken 471-8571 (JP); KOBAYAKAWA, Satoshi, Toyota-shi, Aichi-ken, 471-8571 (JP)
(74) Representative: Kuhnen & Wacker
(86) International application number: PCT/JP2009/050251
(87) International publication number: WO 2010/079619

(56) References cited:
- JP-A- 2000 230 414
- JP-A- 2001 182 525
- JP-A- 2003 286 827
- JP-A- 2006 342 734
- JP-A- 2008 261 253
- JP-A- 2008 298 036
- US-A1- 2006 010 857

## Description

### TECHNICAL FIELD

The present invention relates to an exhaust purification apparatus for an internal combustion engine.

### BACKGROUND ART

In general, as an exhaust purification apparatus arranged in an exhaust system of an internal combustion engine such as a diesel engine, an NOx catalyst is known which is configured to purify nitrogen oxide (NOx) contained in exhaust gas. Various types of NOx catalysts are known. Among these NOx catalysts, a selective reduction type is well known which continuously reduces and removes NOx by addition of a reducing agent. As the reducing agent, an aqueous solution of urea or ammonia is known. Normally, an aqueous solution of urea mixed in water in a predetermined ratio is injected and fed into exhaust gas present upstream of the catalyst, to hydrolyze the urea contained in this water solution of urea by the heat of the exhaust gas or the like. Thus, ammonia is generated. Then, the ammonia performs a reduction action to remove oxygen from the NOx on the selective reduction catalyst to recover nitrogen NOx. As a result, the NOx in the exhaust gas is purified (see, for example, Japanese Patent Laid-Open No. JP 2006-342735 A, Japanese Patent Laid-Open No. JP 2006-112313 A or WO 2004/18850 A) .

An exhaust treatment system having an SCR reactor following a NOx adsorber is furthermore known from US 2006/010857 A.

### DISCLOSURE OF THE INVENTION

When, for example, the internal combustion engine is started, the temperature of the selective reduction catalyst may have not reached the activating temperature thereof. In this state, the NOx generated in the internal combustion engine may be emitted to the exterior without being purified. To solve this problem, a technique has been proposed in which an NOx adsorbent is provided upstream of the selective reduction catalyst to temporarily adsorb NOx. In this case, while the selective reduction catalyst is inactive, NOx is adsorbed to the NOx adsorbent, and once the selective reduction catalyst is activated, the NOx is desorbed from the NOx adsorbent.

However, when a large amount of NOx adsorbed to the NOx adsorbent is supplied to the selective reduction catalyst, the selective reduction catalyst may fail to completely purify the NOx, part of the NOx which has not been purified may be emitted to the exterior.

The present invention has been developed in view of the above-described circumstances. An object of the preset invention is to provide an exhaust purification apparatus for an internal combustion engine which allows an NOx purification rate to be improved by restraining NOx from slipping through a selective reduction catalyst without being purified regardless of whether the selective reduction catalyst is active or inactive. This object is solved by the exhaust purification apparatus of claim 1.

An exhaust purification apparatus for an internal combustion engine according to a first aspect of the present invention is characterized by comprising an NOx adsorbent provided in an exhaust passage in the internal combustion engine to temporarily adsorb NOx contained in exhaust gas, a selective reduction catalyst provided downstream of the NOx adsorbent in the exhaust passage to selectively reduce the NOx contained in the exhaust gas, reducing agent supply means for supplying ammonia as a reducing agent to the selective reduction catalyst, desorption means for desorbing the NOx adsorbed to the NOx adsorbent, adjustment means for adjusting an amount of NOx desorbed by the desorption means to restrain the NOx from being emitted to exterior when the NOx is desorbed from the NOx adsorbent.

### (cancelled)

The exhaust purification apparatus for an internal combustion engine further comprises ammonia amount estimation means for estimating the amount of ammonia adsorbed to the selective reduction catalyst, wherein the adjustment means adjusts the amount of NOx desorbed by the desorption means in accordance with the estimated ammonia adsorption amount.

In addition to the above-described configuration, a configuration may be adopted in which the adjustment means adjusts the NOx desorption amount by controlling a temperature of the NOx adsorbent. Preferably, the NOx desorption amount is adjusted by utilizing an amount of adsorbable NOx varying depending on the temperature of the NOx adsorbent.

In addition to the above-described configuration, a configuration may be adopted in which the desorption means includes a burner provided upstream of the NOx adsorbent in the exhaust passage to inject combustion gas into the exhaust passage and in which the adjustment means adjusts the NOX desorption amount by controlling an amount of heat discharged by the burner.

In addition to the above-described configuration, a configuration may be adopted in which desorption of the NOx by the desorption means is carried out during an idling operation or while a vehicle is being decelerated.

The present invention can improve the NOx purification rate by restraining NOx from slipping through the selective reduction catalyst without being purified regardless of whether the selective reduction catalyst is active or inactive.

### BRIEF DESCRIPTION OF THE DRAWINGS

[Fig. 1] Fig. 1 is a diagram showing a configuration of an exhaust purification apparatus for an internal combustion engine according to an embodiment of the present invention;
[Fig. 2] Fig. 2 is a flowchart illustrating an example of an NOx desorption process according to an embodiment of the present invention;
[Fig. 3] Fig. 3 is a diagram illustrating an example of a map used to estimate an NOx discharge amount;
[Fig. 4] Fig. 4 is a graph illustrating the relationship between the catalyst floor temperature of a selective reduction catalyst and the maximum adsorption amount of adsorbable ammonia;
[Fig. 5] Fig. 5 is a flowchart illustrating an example of an NOx purification rate adjustment process according to an embodiment of the present invention;
[Fig. 6] Fig. 6 is a diagram illustrating an example of a map used to determine an NOx purification rate;
[Fig. 7] Fig. 7 is a flowchart illustrating an example of an NOx desorption amount adjustment process according to an embodiment of the present invention;
[Fig. 8] Fig. 8 is a diagram illustrating an example of a map used to determine the amount of purifiable NOx from the estimated ammonia adsorption amount;
[Fig. 9] Fig. 9 is a diagram illustrating an example of a map used to determine a correction coefficient for correcting the NOx purification amount determined in Fig. 8; and

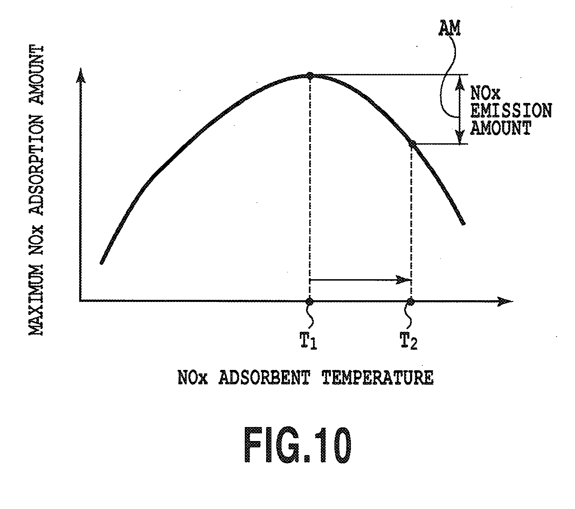

[Fig. 10] Fig. 10 is a diagram illustrating a method for controlling an NOx emission amount by adjusting the temperature of an NOx adsorbent.

### BEST MODE FOR CARRYING OUT THE INVENTION

The best embodiment of the present invention will be described below with reference to the accompanying drawings.

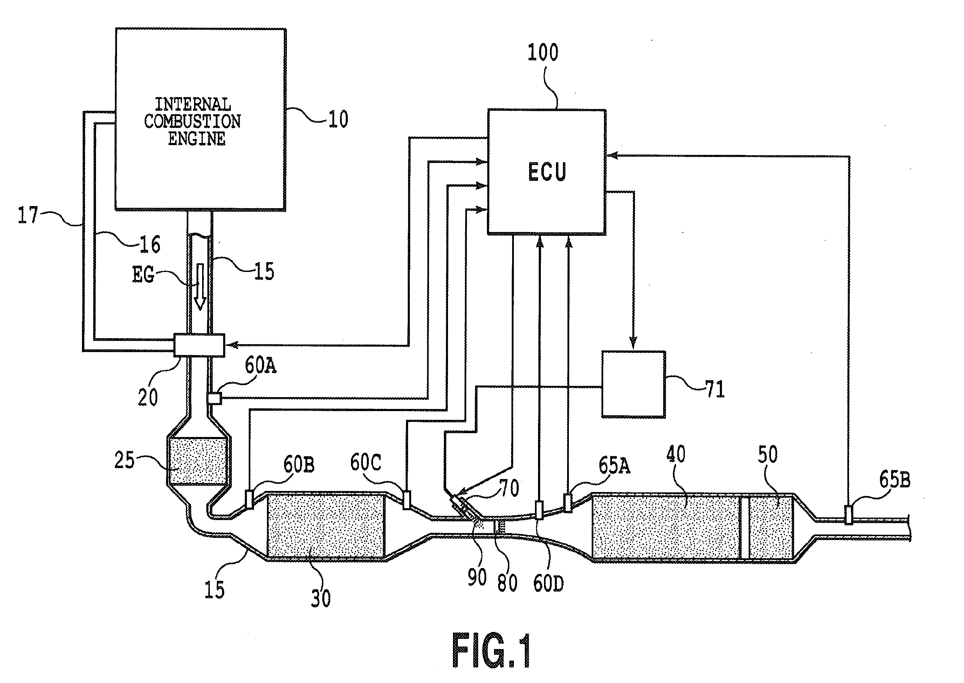

Fig. 1 is a diagram of a configuration of an exhaust purification apparatus according to an embodiment of the present invention.

In Fig. 1, an internal combustion engine 10 is a diesel engine. A burner 20, an adsorbent 25, a DPF (Diesel Particulate Filter) 30, a selective reduction catalyst converter 40, and a oxidation catalyst converter 50 are provided in an exhaust passage 15 in the internal combustion engine 10 in order from an upstream side; the burner 20 serves as desorption means, the adsorbent 25 can adsorb NOx, and the DPF 30 collects PM (Particulate Matter) contained in exhaust gas EG.

In the exhaust passage 15, an exhaust temperature sensor 60A is provided between the burner 20 and the NOx adsorbent 25. An exhaust temperature sensor 60B is provided between the NOx adsorbent 25 and the DPF 30. Between the DPF 30 and the selective reduction catalyst converter 40, an exhaust temperature sensor 60C is provided on the upstream side, whereas an exhaust temperature sensor 60D is provided on the downstream side. Outputs from the exhaust temperature sensors 60A to 60D are input to an electronic control unit (ECU) 100.

In the exhaust passage 15, an NOx sensor 65A is provided upstream of the selective reduction catalyst converter 40. An NOx sensor 65B is provided downstream of the oxidation catalyst converter 50. Outputs from the NOx sensors 65A and 65B are input to the electronic control unit (ECU) 100.

In the exhaust passage 15, an aqueous-solution-of-urea addition valve 70 and an addition valve downstream mixer 80 are provided between the DPF 30 and the selective reduction catalyst converter 40; the aqueous-solution-of-urea addition valve 70 serves as reducing agent supply means for adding a water solution of urea to the exhaust passage 15, and the addition valve downstream mixer 80 is located downstream of the aqueous-solution-of-urea addition valve 70 to mix the exhaust gas EG and the water solution of urea.

The aqueous-solution-of-urea addition valve 70 is connected to an aqueous-solution-of-urea tank 71 in which an aqueous solution of urea with a predetermined concentration is accommodated. A pump (not shown in the drawings) is provided in the aqueous-solution-of-urea tank 71 to supply an aqueous solution of urea to the aqueous-solution-of-urea addition valve 70 in accordance with a control instruction from the ECU 100. The aqueous-solution-of-urea addition valve 70 serves to add an addition amount of aqueous solution of urea 90 corresponding to the control instruction from the ECU 10, to the exhaust passage 15.

The burner 20 is connected to the internal combustion engine 10, via a fuel supply pipe 16 through which fuel is supplied, and an air supply pipe 17 through which air is supplied. The burner 20 includes a fuel injection valve configured to inject fuel toward the exhaust passage 15, an air entry through which the air from the air supply pipe 17 is fed toward the exhaust passage 15, and an ignition plug configured to ignite the fuel injected from the fuel injection valve and mixed with the air. The burner 20 is controllably started and stopped by the ECU 100. When the burner 20 is started as required, the fuel is combusted and the resulting combustion gas is supplied to the exhaust passage 15 to raise the temperature of the exhaust gas EG. Furthermore, unburned fuel is fed into the exhaust passage 15. The burner 20 can also feed gas obtained by completely combusting the fuel, into the exhaust passage 15. Alternatively, a mixture of the gas resulting from the combustion with the unburned fuel may be fed into the exhaust passage 15.

The NOx adsorbent 25 is configured to be able to temporarily adsorb and hold nitrogen oxide (NOx). The NOx adsorbent 25 is **characterized in that** the amount of NOx that can be adsorbed to the NOx adsorbent varies depending on the temperature of the NOx adsorbent 25 as described below. The NOx adsorbent 25 is formed of a well-known adsorption material, for example, zeolite.

The DPF 30 is a filter configured to collect particulate matter (PM) contained in the exhaust gas EG. As is well known, the DPF 30 includes, for example, a honeycomb-shaped member formed of metal or ceramics. When a predetermined amount of PM is deposited in the DPF 30, the filter function of the DPF 30 needs to be recovered by using the burner 20 to heat the DPF 30 to a temperature equal to or higher than the activating temperature thereof to combust the collected PM. The temperature of the DPF 30 during this recovery process is, for example, between about 600°C and about 700°C. Whether or not the predetermined amount of PM has been deposited in the DPF 30 is determined by a well-known technique. Thus, this determination will not be described.

The selective reduction catalyst converter 40 uses a water solution of urea added through the urea addition valve 70, as a reducing agent to selectively reduce NOx contained in the exhaust gas EG into nitrogen gas and water. Specifically, the water solution of urea added into the exhaust gas EG is hydrolyzed into ammonia by the heat of the exhaust gas EG. The ammonia reacts with the NOx in the catalyst converter 40, where the ammonia is reduced into water and harmless nitrogen. The selective reduction catalyst converter 40 has a well-known structure and may include, for example, Si, O, and Al as main components as well as zeolite containing Fe ions. Alternatively, the selective reduction catalyst converter 40 may include, for example, a base material formed of oxidized aluminum alumina and a selective reduction catalyst such as a vanadium catalyst (V₂O₅) carried on a surface of the base material. The selective reduction catalyst converter 40 is not particularly limited to the above-described examples. The activating temperature at which the selective reduction catalyst converter 40 functions as a catalyst is, for example, about 200°C or higher. When fed to the selective reduction catalyst converter 40 not having reached the activation temperature, the NOx may be discharged to the exterior without being reduced.

The oxidation catalyst converter 50 serves to oxidize unburned fuel and ammonia having slipped through the selective reduction catalyst converter 40. The oxidation catalyst converter 50 has a well-known structure.

The ECU 100 includes hardware and required software; the hardware includes a CPU (Central Processing Unit), a ROM (Read Only Memory), a RAM (Random Access Memory), a backup memory such as an EEPROM (Electronically Erasable and Programmable Read Only Memory), an input interface circuit with an A/D converter, a buffer, and the like, and an output interface circuit with a drive circuit and the like. The ECU 10 controls the burner 20, the aqueous-solution-of-urea addition valve 70, and the like based on signals and the like from the exhaust temperature sensors 60A to 60D, the NOx sensors 65A and 65B, and the like. Specific processing carried out by the ECU 100 will be described below.

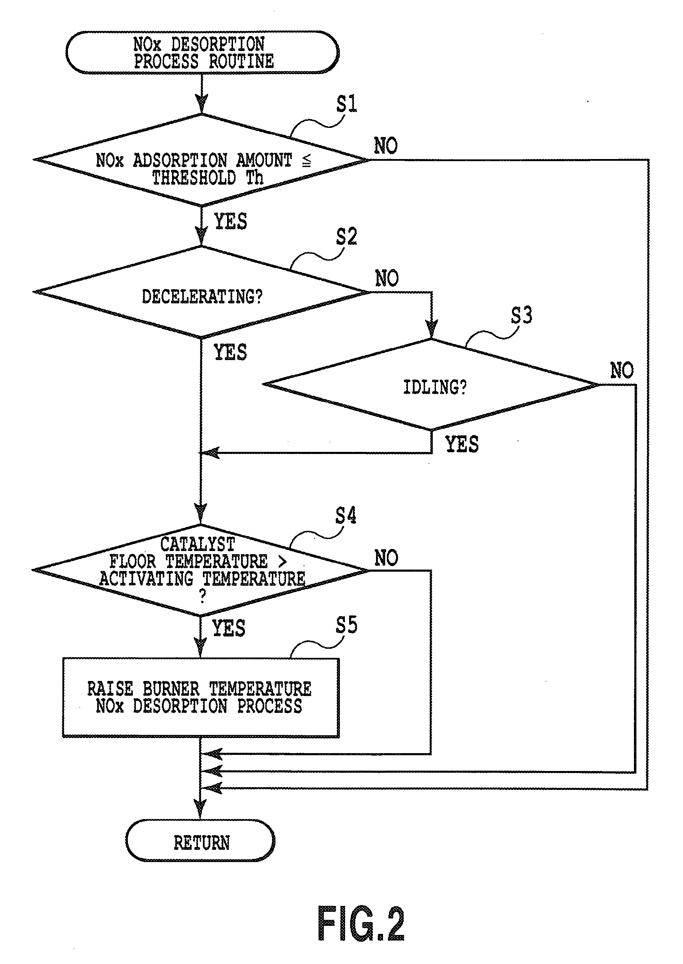

Now, an example of an NOx desorption process in the exhaust purification apparatus configured as described above will be described with reference to a flowchart illustrated in Fig. 2. A processing routine illustrated in Fig. 2 is, for example, executed every predetermined time.

When started, the internal combustion engine 10 discharges the exhaust gas EG containing NOx and PX. The NOx contained in the exhaust gas EG is adsorbed to the NOx adsorbent 25. The PM contained in the exhaust gas EG is collected in the DPF 30. As the vehicle travels, the amount of NOx adsorbed to the NOx adsorbent 25 and the amount of PM collected in the DPF 30 increase.

After the internal combustion engine 10 is started, the aqueous solution of urea 90 is added through the aqueous-solution-of-urea addition valve 70 and hydrolyzed into ammonia by the heat of the exhaust gas EG and the like. The ammonia is then adsorbed to the selective reduction catalyst in the selective reduction catalyst converter 40. When the selective reduction catalyst shifts from an inactive state to an active state as a result of the heat of the exhaust gas EG and the like, purification of the exhaust gas EG is started to remove NOx. When the selective reduction catalyst is activated, the NOx having slipped through the NOx adsorbent 25 without being adsorbed thereto is purified by the selective reduction catalyst.

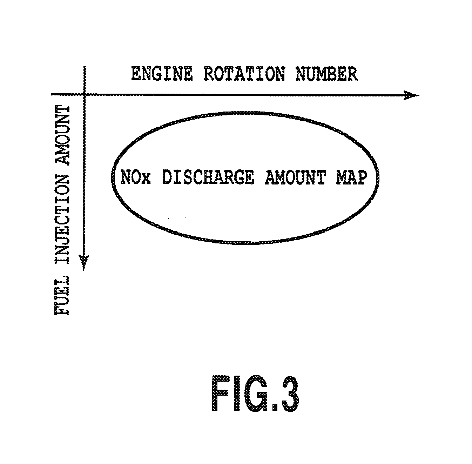

As shown in Fig. 2, the ECU 100 determines whether or not the NOx adsorption amount of the NOx adsorbent 25 exceeds a predetermined threshold Th (step S1). The NOx adsorption amount of the NOx adsorbent 25 is estimated using a map of the NOx discharge amount defined based on the relationship between the fuel injection amount and engine rotation number in the internal combustion engine 10 as shown in Fig. 3. The integrated value of the NOx discharge amount determined based on the NOx map corresponds to the estimated value of NOx adsorption amount of the NOx adsorbent 25.

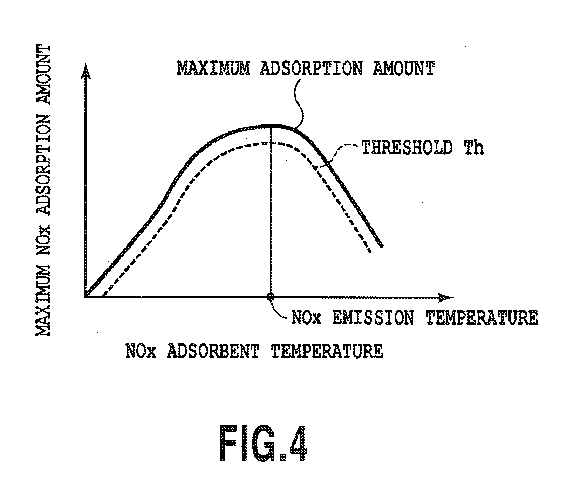

The NOx adsorbent 25 is **characterized in that** for example, as shown in Fig. 4, the maximum amount of NOx adsorbed to the NOx adsorbent varies depending on the temperature of the NOx adsorbent 25. That is, the maximum adsorption amount of the NOx adsorbent 25 is defined in association with the temperature of the NOx adsorbent 25. Thus, as shown in Fig. 4, the estimated value of the NOx adsorption amount is compared with the threshold Th defined in association with the temperature of the NOx adsorbent 25 so that the threshold Th does not exceed the maximum adsorption amount. If the estimated value of the NOx adsorption amount does not exceed the threshold Th, the ECU 100 ends the processing.

On the other hand, if the estimated value of the NOx adsorption amount exceeds the threshold Th, the ECU 100 carries out the following processing to desorb NOx from the NOx adsorbent 25.

First, the ECU 100 checks the vehicle for a driving status to determine whether or not the vehicle is decelerating (step S2). If the vehicle is not decelerating, the ECU 100 determines whether or not the vehicle is idling (step S3). If the vehicle is not idling, the ECU 100 ends the processing. The reason for this determination will be explained below.

In steps S2 and S3, if the driving status of the vehicle indicates that the vehicle is decelerating or idling, the ECU determines whether or not the selective reduction catalyst exceeds the activating temperature thereof (step S4). This is because if the selective reduction catalyst fails to have reached the activating temperature thereof, the NOx may slip through the selective reduction catalyst without being purified.

In step S4, if the selective reduction catalyst fails to have reached the activating temperature thereof, the ECU 100 ends the processing. If the selective reduction catalyst has reached the activating temperature thereof, the ECU 100 allows the burner 20 to inject combustion gas into the exhaust passage 15 to heat the NOx adsorbent 25 to an NOx emission temperature o higher. Thus, the NOx is desorbed from the NOx adsorbent 25 (step S5). Thus, the NOx desorbed from the NOx adsorbent 25 is purified by the selective reduction catalyst.

Here, when such an NOx discharge amount map as shown in Fig. 3 is used to manage the NOx adsorption amount of the NOx adsorbent 25, the amount of heat emitted by the burner 20 and required to raise the temperature of the NOx adsorbent 25 depends on the amount of heat of the exhaust gas and the temperature of the exhaust gas. Thus, in particular, with a large amount of gas and a relatively low exhaust temperature, energy consumed by the burner 20 increases to degrade fuel efficiency. Hence, the process of desorbing the NOx from the NOx adsorbent 25 is carried out only when the driving status of the vehicle indicates that the vehicle is decelerating or idling. This enables the NOx adsorption capacity to be provided during acceleration when the NOx discharge amount increases, and allows the degradation of the fuel efficiency to be minimized.

In the above-described NOx desorption process, when a large amount of NOx is rapidly emitted from the NOx adsorbent, it is expected that the amount of NOx may exceed the NOx purification capacity of the selective reduction catalyst.

Thus, in the present embodiment, when the NOx is to be desorbed from the NOx adsorbent 25, at least one of the purification rate of the selective reduction catalyst and the NOx desorption amount in the desorption process is adjusted to restrain the NOx from slipping through the selective reduction catalyst and being emitted to the exterior.

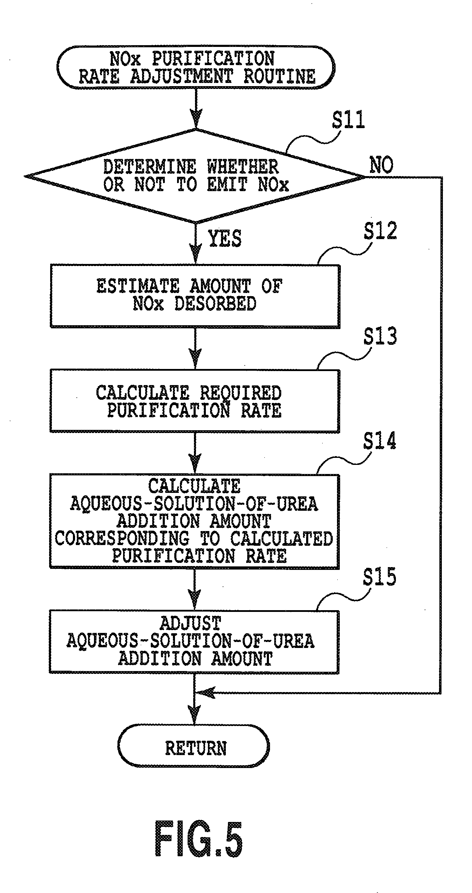

Here, an example of an NOx purification rate adjustment process carried out by the ECU 100 will be described with reference to a flowchart shown in Fig. 5. A processing routine in Fig. 5 is, for example, executed every predetermined time.

Here, the NOx purification rate corresponds to the ratio of the amount of NOx purified by the selective reduction catalyst converter 40 to the total amount of NOx. For example, the NOx purification rate can be determined based on outputs from the NOx sensors 65A and 65B provided on the upstream side and downstream side, respectively, of the selective reduction catalyst converter 40.

First, the ECU 100 determines whether or not to emit (desorb) the NOx adsorbed to the NOx adsorbent 25 (step S11). This determination is similar to that in steps S1 to S4 described with reference to Fig. 2. Alternatively, the determination can be made by a process other than the one illustrated in Fig. 2.

In step S11, if the NOx need not be emitted, the ECU 100 ends the processing. If the NOx needs to be emitted, the ECU 100 estimates the amount of NOx emitted when a process of desorbing the NOx from the NOx adsorbent 25 is carried out. The NOx amount can be estimated from the current NOx adsorption amount of the NOx adsorbent 25.

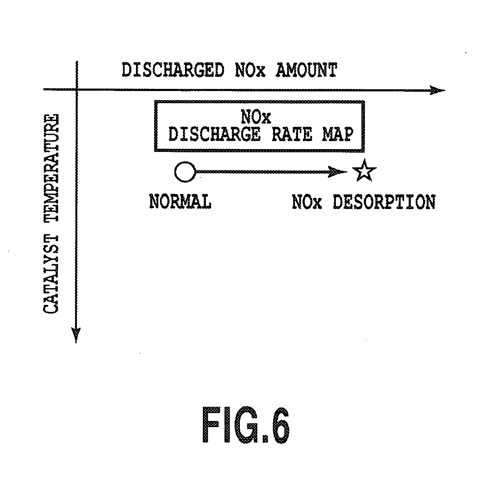

Then, the ECU 100 calculates the NOx purification rate at which the NOx emitted from the NOx adsorbent 25 is purified (step S13). That is, the amount of NOx to be purified by the selective reduction catalyst temporarily increases, and the purification rate of the selective reduction catalyst is correspondingly increased. The purification rate of the selective reduction catalyst can be determined, for example, using such an NOx purification rate map as shown in Fig. 6. The NOx purification rate map shown in Fig. 6 is pre-defined in association with the catalyst temperature of the selective reduction catalyst and the amount of NOx discharged toward the selective reduction catalyst.

Then, the ECU 100 calculates the aqueous-solution-of-urea addition amount required for the NOx purification rate calculated in step S13 (step S14). The required aqueous-solution-of-urea addition amount can be calculated based on the amount of NOx discharged, the determined NOx purification rate, and the estimated value of the amount of ammonia already adsorbed to the selective reduction catalyst. The estimated value of the amount of ammonia already adsorbed to the selective reduction catalyst can be calculated from the integrated value of the aqueous-solution-of-urea addition amount, the integrated value of the NOx purification amount, and the like. A method for estimating the amount of ammonia already adsorbed to the selective reduction catalyst corresponds to a well-known technique and will not be described in detail. Thus, the aqueous-solution-of-urea addition amount is increased and reduced depending on the estimated ammonia adsorption amount. This allows excessive addition of an aqueous solution of urea to be prevented.

Then, based on the aqueous-solution-of-urea addition amount calculated in step S14, the ECU 100 controls the aqueous-solution-of-urea addition valve 70 to adjust the aqueous-solution-of-urea addition amount (step S15). That is, if not all of the amount of NOx discharged toward the reduction catalyst can be purified at a normal NOx purification rate, the aqueous-solution-of-urea addition amount is increased.

When the NOx adsorbed to the NOx adsorbent 25 is purged, the above-described processing allows the NOx to be restrained from slipping through the selective reduction catalyst even with a temporary increase in the amount of NOx supplied to the selective reduction catalyst.

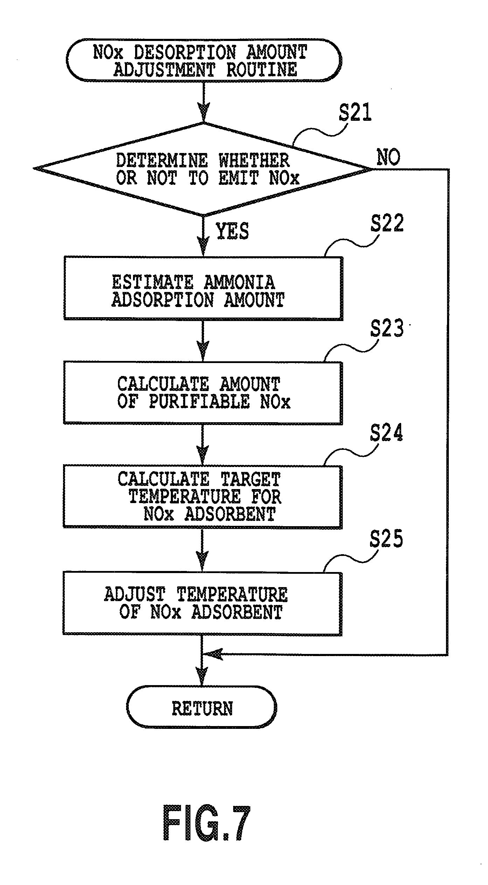

Now, an example of an NOx desorption amount adjustment process is carried out by the ECU 100 will be described with reference to a flowchart shown in Fig. 7. A processing routine illustrated in Fig. 7 is, for example, executed every predetermined time. Furthermore, the NOx desorption amount adjustment process illustrated in Fig. 7 can be used with the NOx purification rate adjustment process described with reference to Fig. 5 or can be independently carried out.

First, the ECU 100 determines whether or not to emit (desorb) the NOx adsorbed to the NOx adsorbent 25 (step S21). This determination is similar to that in steps S1 to S4 described with reference to Fig. 2. Alternatively, the determination can be made by a process other than the one illustrated in Fig. 2.

In step S11, if the NOx need not be emitted, the ECU 100 ends the processing. If the NOx needs to be emitted, the ECU 100 estimates the amount of ammonia adsorbed to the selective reduction catalyst (step S22). A method for estimating the ammonia adsorption amount is similar to that described above.

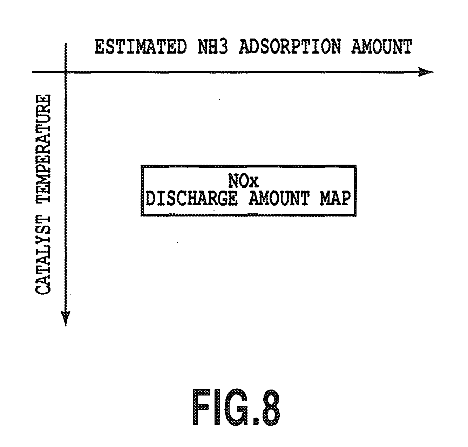

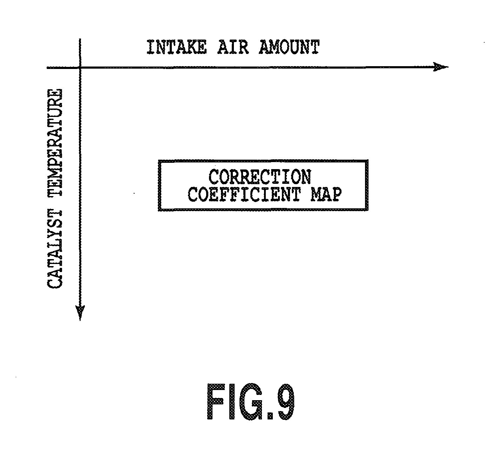

Then, the ECU 100 calculates the amount of purifiable NOx based on the estimated ammonia adsorption amount (step S23). The amount of purifiable NOx can be determined, for example, using an NOx purification amount map defined in association with the estimated ammonia adsorption amount and the catalyst temperature of the selective reduction catalyst as shown in Fig. 8. In addition, the amount of NOx that can be purified by the selective reduction catalyst can be more accurately estimated by multiplying, in a corrective manner, the calculated amount of purifiable NOx by a correction coefficient obtained from a correction coefficient map defined in association with the amount of air sucked into an inlet system of the internal combustion engine 10 and the catalyst temperature of the selective reduction catalyst, for example, as shown in Fig. 9.

Then, the ECU 100 determines a target temperature for the NOx adsorbent at which the NOx is desorbed from the NOx adsorbent by an amount corresponding to the amount of purifiable NOx calculated in step S23 (step S24). For example, as shown in Fig. 9, the maximum NOx adsorption amount of the NOx adsorbent 25 varies depending on the temperature of the NOx adsorbent. In Fig. 9, assuming that T1 denotes the temperature of the NOx adsorbent measured before emission of the NOx, that is, the temperature of the NOx adsorbent measured before temperature adjustment, the amount of NOx emitted corresponds to AM when the temperature of the NOx adsorbent 25 is raised to T2. Thus, a target temperature T2 with respect to the current temperature T1 in association with the amount of purifiable NOx calculated in step 23 is determined using a map that defines the relationship between the NOx adsorption amount and temperature of the NOx adsorbent 25 as shown in Fig. 9, a function, or the like.

Then, the ECU 100 controls the burner 20 so that the temperature of the NOx adsorbent 25 reaches the target temperature T2 determined in step S24. The temperature of the NOx adsorbent 25 can be adjusted by controlling the amount of heat discharged by the burner 20. Controlling the temperature of the NOx adsorbent 25 allows a desired amount of NOx to be desorbed from the NOx adsorbent 25, with the desorbed NOx reliably purified in the selective reduction catalyst.

In the above-described embodiment, the burner 20 is illustrated as desorption means. However, the desorption means is not limited to the burner 20. For example, the NOx adsorbent may be provided with an oxidation catalyst function so that fuel can be supplied to and combusted in the NOx adsorbent 25 to desorb the NOx from the NOx adsorbent. The fuel may be supplied using a dedicated fuel injection valve or by what is called post injection in the internal combustion engine 10.

In the above-described embodiment, the aqueous-solution-of-urea addition valve is illustrated as reducing agent supply means. However, the reducing agent supply means is not limited to the aqueous-solution-of-urea addition valve. Ammonia may be supplied directly to the selective reduction catalyst.

## Claims

1. An exhaust purification apparatus for an internal combustion engine (10) comprising:
a NOx adsorbent (25) provided in an exhaust passage (15) in the internal combustion engine (10) to temporarily adsorb NOx contained in exhaust gas;
a selective reduction catalyst (40) provided downstream of the NOx adsorbent (25) in the exhaust passage (15) to selectively reduce the NOx contained in the exhaust gas;
reducing agent supply means (70) for supplying ammonia as a reducing agent to the selective reduction catalyst (40) :
desorption means (20) for desorbing the NOx adsorbed to the NOx adsorbent (25); and an electronic control unit (100) **characterized by** comprising
adjustment means (100) for adjusting an amount of NOx desorbed by the desorption means (20) to restrain the NOx from being emitted to exterior when the NOx is desorbed from the NOx adsorbent (25); and
ammonia amount estimation means (100) for estimating an amount of ammonia adsorbed to the selective reduction catalyst (40), and
in that the adjustment means (100) adjusts the amount of NOx desorbed by the desorption means (20) in accordance with the estimated ammonia adsorption amount.

2. The exhaust purification apparatus for the internal combustion engine (10) according to Claim 1, **characterized in that** the adjustment means (100) adjusts the NOx desorption amount by controlling a temperature of the NOx adsorbent (25).

3. The exhaust purification apparatus for the internal combustion engine (10) according to Claim 2, **characterized in that** the adjustment means (100) adjusts the NOx desorption amount by utilizing an amount of adsorbable NOx varying depending on the temperature of the NOx adsorbent (25).

4. The exhaust purification apparatus for the internal combustion engine (10) according to any one of Claims 1 to 3, **characterized in that** the desorption means (20) includes a burner provided upstream of the NOx adsorbent (25) in the exhaust passage (15) to inject combustion gas into the exhaust passage (15) and
the adjustment means (100) adjusts the NOX desorption amount by controlling an amount of heat discharged by the burner.

5. The exhaust purification apparatus for the internal combustion engine (10) according to any one of Claims 1 to 4, **characterized in that** desorption of the NOx by the desorption means (20) is carried out during an idling operation or while a vehicle is being decelerated.

6. The exhaust purification apparatus for the internal combustion engine (10) according to any one of Claims 1 to 5, **characterized in that** the adjustment means (100) calculates the amount of purifiable NOx based on the estimated ammonia adsorption amount and adjusts the amount of NOx desorbed from the NOx adsorbent (25) by an amount corresponding to the calculated amount of purifiable NOx.

## Patentansprüche

1. Abgasreinigungsvorrichtung für eine Verbrennungskraftmaschine (10), aufweisend:
einen NOx-Adsorber (25), der sich in einem Abgasstrang (15) in der Verbrennungskraftmaschine (10) befindet, um in dem Abgas enthaltenes NOx temporär zu adsorbieren;
einen Selektivreduktionskatalysator (40), der sich stromabwärts von dem NOx-Adsorber (25) in dem Abgasstrang (15) befindet, um das in dem Abgas enthaltene NOx selektiv zu reduzieren;
eine Reduktionsmittel-Zuführeinrichtung (70), um dem Selektivreduktionskatalysator (40) Ammoniak als ein Reduktionsmittel zuzuführen;
eine Desorptionseinrichtung (20) zum Desorbieren des an dem NOx-Adsorber (25) adsorbierten NOx; und eine elektronische Steuereinheit (100), die **dadurch gekennzeichnet ist, dass** sie Folgendes aufweist:
eine Einstellungseinrichtung (100) zum Einstellen einer von der Desorptionseinrichtung (20) desorbierten NOx-Menge, um zu verhindern, dass das NOx nach außen emittiert wird, wenn das NOx von dem NOx-Adsorber (25) desorbiert wird; und
eine Ammoniakmengen-Schätzeinrichtung (100) zum Schätzen einer an dem Selektivreduktionskatalysator (40) adsorbierten Ammoniakmenge, und
dadurch, dass die Einstellungseinrichtung (100) die von der Desorptionseinrichtung (20) desorbierte NOx-Menge in Übereinstimmung mit der geschätzten Ammoniakadsorptionsmenge einstellt.

2. Abgasreinigungsvorrichtung für die Verbrennungskraftmaschine (10) nach Anspruch 1, **dadurch gekennzeichnet, dass** die Einstellungseinrichtung (100) die NOx-Desorptionsmenge durch Steuern einer Temperatur des NOx-Adsorbers (25) einstellt.

3. Abgasreinigungsvorrichtung für die Verbrennungskraftmaschine (10) nach Anspruch 2, **dadurch gekennzeichnet, dass** die Einstellungseinrichtung (100) die NOx-Desorptionsmenge dadurch einstellt, dass sie eine Menge an adsorbierbarem NOx verwendet, die abhängig von der Temperatur des NOx-Adsorbers (25) variiert.

4. Abgasreinigungsvorrichtung für die Verbrennungskraftmaschine (10) nach einem der Ansprüche 1 bis 3, **dadurch gekennzeichnet, dass** die Desorptionseinrichtung (20) einen Brenner enthält, der sich stromaufwärts von dem NOx-Adsorber (25) in dem Abgasstrang (15) befindet, um Verbrennungsgas in den Abgasstrang (15) einzuspritzen, und
dass die Einstellungseinrichtung (100) die NOx-Desorptionsmenge dadurch einstellt, dass sie eine durch den Brenner abgegebene Wärmemenge steuert.

5. Abgasreinigungsvorrichtung für die Verbrennungskraftmaschine (10) nach einem der Ansprüche 1 bis 4, **dadurch gekennzeichnet, dass** die Desorption des NOx durch die Desorptionseinrichtung (20) während eines Leerlaufbetriebs oder während des Abbremsens des Fahrzeugs durchgeführt wird.

6. Abgasreinigungsvorrichtung für die Verbrennungskraftmaschine (10) nach einem der Ansprüche 1 bis 5, **dadurch gekennzeichnet, dass** die Einstellungseinrichtung (100) die Menge an bereinigbarem NOx auf der Grundlage der geschätzten Ammoniakadsorptionsmenge berechnet und die von dem NOx-Adsorber (25) desorbierte NOx-Menge um eine Menge einstellt, die der berechneten Menge an bereinigbarem NOx- entspricht.

## Revendications

1. Appareil de purification de gaz d'échappement pour un moteur à combustion interne (10) comprenant :
un adsorbant de NOx (25) fourni dans un passage de gaz d'échappement (15) dans le moteur à combustion interne (10) pour adsorber temporairement NOx contenu dans les gaz d'échappement ;
un catalyseur de réduction sélective (40) fourni en aval de l'adsorbant de NOx (25) dans le passage de gaz d'échappement (15) pour réduire sélectivement le NOx contenu dans les gaz d'échappement ;
un moyen d'alimentation en agent réducteur (70) pour introduire de l'ammoniac comme agent réducteur dans le catalyseur de réduction sélective (40) ;
un moyen de désorption (20) pour désorber le NOx adsorbé sur l'adsorbant de NOx (25) ; et
une unité de contrôle électronique (100), **caractérisée en ce qu'**il comprend
un moyen d'ajustement (100) pour ajuster une quantité de NOx désorbé par le moyen de désorption (20) pour restreindre l'émission de NOx vers l'extérieur lorsque le NOx est désorbé de l'adsorbant de NOx (25) ; et
un moyen d'estimation de quantité d'ammoniac (100) pour estimer une quantité d'ammoniac adsorbé sur le catalyseur de réduction sélective (40), et
**en ce que** le moyen d'ajustement (100) ajuste la quantité de NOx désorbé par le moyen de désorption (20) selon la quantité d'adsorption d'ammoniac estimée.

2. Appareil de purification de gaz d'échappement pour le moteur à combustion interne (10) selon la revendication 1, **caractérisé en ce que** le moyen d'ajustement (100) ajuste la quantité de désorption de NOx en contrôlant une température de l'adsorbant de NOx (25).

3. Appareil de purification de gaz d'échappement pour le moteur à combustion interne (10) selon la revendication 2, **caractérisé en ce que** le moyen d'ajustement (100) ajuste la quantité de désorption de NOx en utilisant une quantité de NOx adsorbable variant selon la température de l'adsorbant de NOx (25).

4. Appareil de purification de gaz d'échappement pour le moteur à combustion interne (10) selon l'une quelconque des revendications 1 à 3, **caractérisé en ce que** le moyen de désorption (20) comprend un brûleur fourni en amont de l'adsorbant de NOx (25) dans le passage de gaz d'échappement (15) pour injecter du gaz de combustion dans le passage de gaz d'échappement (15) et
le moyen d'ajustement (100) ajuste la quantité de désorption de NOx en contrôlant une quantité de chaleur évacuée par le brûleur.

5. Appareil de purification de gaz d'échappement pour le moteur à combustion interne (10) selon l'une quelconque des revendications 1 à 4, **caractérisé en ce qu'**une désorption du NOx par le moyen de désorption (20) est réalisée pendant une opération de marche au ralenti ou pendant qu'un véhicule est en décélération.

6. Appareil de purification de gaz d'échappement pour le moteur à combustion interne (10) selon l'une quelconque des revendications 1 à 5, **caractérisé en ce que** le moyen d'ajustement (100) calcule la quantité de NOx purifiable sur la base de la quantité d'adsorption d'ammoniac estimée et ajuste la quantité de NOx désorbé de l'adsorbant de NOx (25) par une quantité correspondant à la quantité calculée de NOx purifiable.
